Europäisches Patentamt

European Patent Office

Office européen des brevets

(19)

(11) Veröffentlichungsnummer : **0 128 870**
**B1**

(12) # EUROPÄISCHE PATENTSCHRIFT

(45) Veröffentlichungstag der Patentschrift :
06.05.87

(51) Int. Cl.⁴ : **B 21 D 28/28**

(21) Anmeldenummer : 84810277.8

(22) Anmeldetag : 07.06.84

(54) Vorrichtung zum Feinschneiden von Fenstern in einem Kugelkäfig.

(30) Priorität : 09.06.83 CH 3169/83

(43) Veröffentlichungstag der Anmeldung :
19.12.84 Patentblatt 84/51

(45) Bekanntmachung des Hinweises auf die Patenterteilung : 06.05.87 Patentblatt 87/19

(84) Benannte Vertragsstaaten :
DE FR GB IT SE

(56) Entgegenhaltungen :
DE-A- 3 044 028
US-A- 4 205 545

(73) Patentinhaber : **Hydrel AG**
**Badstrasse 14**
**CH-8590 Romanshorn (CH)**

(72) Erfinder : **Maurer, Martin**
**Hauptstrasse 76**
**CH-8592 Uttwil (CH)**

(74) Vertreter : **Haffter, Tobias Fred, Dr. Dipl.-Phys. et al**
**PATENTANWALTS-BUREAU ISLER AG Postfach 6940**
**Walchestrasse 23**
**CH-8023 Zürich (CH)**

EP 0 128 870 B1

## Beschreibung

Bei Gleichlaufgelenken für Vorderradantriebe von Fahrzeugen wird das Drehmoment über Kugeln übertragen. Diese Kugeln, deren Anzahl in der Regel sechs beträgt, sind in einem Kugelkäfig in gleichmässig verteilten Fenstern gelagert. Die Fenster haben eine rechteckige Form mit stark gerundeten Ecken. Die beiden Längsflächen jedes Fensters müssen genau bearbeitet sein, damit die Kugel axial mit wenig Spiel geführt ist. Bekannte Bearbeitungsfolgen des Kugelkäfigs umfassen die folgenden Schritte : Formen des Rohlings, Drehen der Innen- und Aussenform, Stanzen der Fenster, Räumen der Längsflächen der Fenster, Einsatzhärten und Schleifen der Aussenform und der Fensterlängsflächen.

Das Räumen der Längsflächen der Fenster, das zufolge der beim Stanzen entstehenden Bruchflächen erforderlich ist, ist in nachteiliger Weise ein teurer Arbeitsgang bei der Herstellung von Kugelkäfigen.

Aufgabe der vorliegenden Erfindung ist, eine Vorrichtung zu schaffen, welche ein Feinschneiden der Fenster von Kugelkäfigen erlaubt, insbesondere auch in Verbindung mit einer dreifach wirkenden Feinschneidpresse.

Die erfindungsgemässe Vorrichtung ist im Patentanspruch 1 definiert.

Ein Ausführungsbeispiel der erfindungsgemässen Vorrichtung und ihre Arbeitsweise werden nachstehend anhand der Zeichnungen erläutert. Es zeigen :

Figur 1 einen Längsschnitt durch die Vorrichtung mit einem eingesetzten Kugelkäfig als Werkstück,

Figur 2 einen Längsschnitt eines Teils der Vorrichtung der Fig. 1 in der Ausgangsstellung der Vorrichtung beim Feinschneiden eines Fensters im Kugelkäfig,

Figur 3 die Vorrichtung der Fig. 2 beim Beginn des Feinschneidvorganges,

Figur 4 die Vorrichtung der Fig. 2 am Ende des Feinschneidvorganges, und

Figur 5 die Vorrichtung der Fig. 2 im geöffneten Zustand zur Durchführung eines weiteren Feinschneidvorganges.

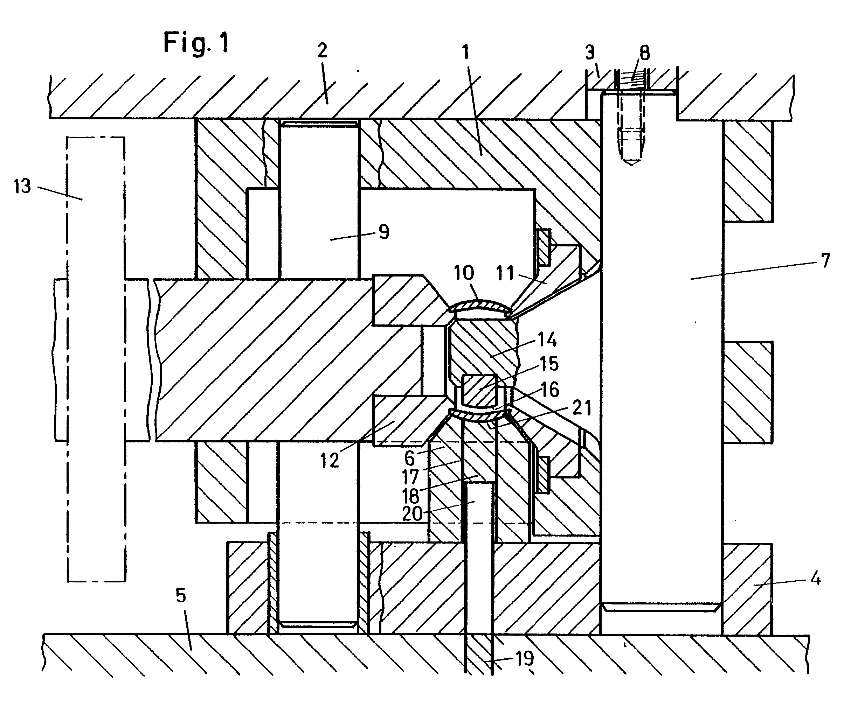

Gemäss Fig. 1 weist die vereinfacht dargestellte Vorrichtung, welche mit den Grundelementen einer hydraulischen, dreifach wirkenden Feinschneidpresse eine Einheit bildet, drei Hauptgruppen von Bauteilen auf. Eine erste Gruppe enthält ein Oberteil 1, welches an einem Niederhaltertisch 2 befestigt ist, der in einem Pressengestell 3 in senkrechter Richtung nach oben gegen einen hydraulisch erzeugten Niederhalterdruck bewegbar ist. Eine zweite Gruppe enthält ein Unterteil 4, welches an einem beweglichen Pressenstössel 5 befestigt ist und welches eine Schneidplatte 6 trägt. Eine dritte Gruppe enthält einen Stempelhalter 7, welcher mittels Schrauben 8 (eine Schraube dargestellt) am Pressengestell 3 lösbar befestigt ist. Das Oberteil 1 ist durch Säulenführungen 9 (eine Säule dargestellt) gegenüber dem Unterteil 4 koaxial geführt. Der Stempelhalter 7 ist im Oberteil 1 und im Unterteil 4 senkrecht und verdrehsicher geführt. Somit besteht Bewegbarkeit in senkrechter Richtung sowohl des Oberteils 1 zum Unterteil 4 als auch des Oberteils 1 und des Unterteils 4 zum Stempelhalter 7.

Ein zu bearbeitender, in einem Axialschnitt dargestellter Kugelkäfig 10 ist im Oberteil 1 eingespannt. Hierzu ist das Oberteil 1 auf seiner einen, in Fig. 1 rechten Seite mit einem drehbar gelagerten Aufnahmering 11 versehen. Aufseiner anderen, in Fig. 1 linken Seite ist im Oberteil 1 ein waagrechter Stirnmitnehmer 12 drehbar und axial verschiebbar gelagert, wobei zum axialen Verschieben des Stirnmitnehmers 12 ein nicht dargestellter hydraulischer Antrieb vorhanden ist. Der Kugelkäfig 10 ist demnach zwischen den Aufnahmering 11 und den Stirnmitnehmer 12 axial und radial zentriert einspannbar. Mit Hilfe eines schematisch dargestellten Indexierantriebs 13 ist es möglich, den Kugelkäfig 10 im dargestellten, axial eingespannten Zustand jeweils um die für den Kugelkäfig vorgesehene Fensterteilung zu drehen.

Der Stempelhalter 7 weist einen waagrechten Ausleger 14 auf, in welchen ein Schneidstempel 15 eingesetzt ist. Der Schneidstempel 15 befindet sich demnach im Innenraum des Kugelkäfigs 10 und weist mit seiner Schneidfläche 16 nach unten zur benachbarten Innenfläche des Kugelkäfigs 10.

Die Schneidplatte 6 hat eine Schneidöffnung 17, in welcher ein dem Schneidstempel 15 zugeordneter Gegenstempel 18 gleitend angeordnet ist. Der Gegenstempel 18 ist einer Gegenkraft ausgesetzt, welche von einem im Pressenstössel 5 eingebauten, hydraulisch arbeitenden Druckkissen 19 erzeugt und von einem Druckbolzen 20 auf den Gegenstempel 18 übertragen wird.

Die Schneidplatte 6 und der Gegenstempel 18 bilden gemeinsam eine Kugelkalotte 21, deren Kugeldurchmesser dem Aussendurchmesser des Kugelkäfigs 10 entspricht. Die Schneidfläche 16 des Schneidstempels 15 entspricht der Innenform des Kugelkäfigs 10.

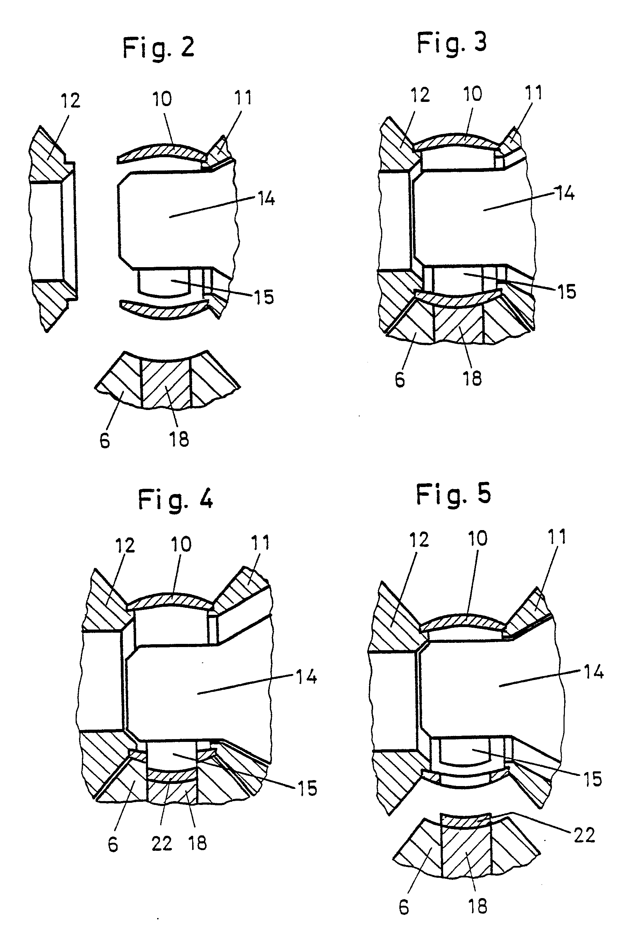

Die Arbeitsweise der in Fig. 1 dargestellten Vorrichtung bzw. die Ablauffolge beim Feinschneiden eines Fensters im Kugelkäfig wird nun anhand der Fig. 2 bis 5 erläutert. In diesen Figuren ist nur ein Ausschnitt der Vorrichtung der Fig. 1 dargestellt, nämlich jeweils der Aufnahmering 11 und der Stirnmitnehmer 12 samt dem dazwischenliegenden Kugelkäfig 10, ferner der Ausleger 14 des Stempelhalters 7 (Fig. 1) mit dem eingesetzten Schneidstempel 15, und die Schneidplatte 6 mit dem Gegenstempel 18.

In Fig. 2 ist die Ausgangsstellung der Vorrichtung bei geöffneter Presse dargestellt, d. h. mit nach unten gefahrenen Pressenstössel 5, Unterteil 4 (Fig. 1) und Schneidplatte 6 (Fig. 2). Die Schneidplatte 6 befindet sich demnach unterhalb der Schneidstellung. Der Stirnmitnehmer 12 befindet sich in seiner ausgefahrenen, linken Endstellung. In die dadurch zwischen dem Stirnmitnehmer 12 und dem Ausleger 14 bestehende Oeffnung, die in Fig. 2 nur verkürzt dargestellt ist, wird der Kugelkäfig 10 von Hand oder mit einem Einlegegerät in die Zentrierung des Aufnahmerings 11 gebracht, wie dies in Fig. 2 dargestellt ist. Hierauf wird der Kugelkäfig 10 durch hydraulisches Heranfahren des Stirnmitnehmers 12 axial zentriert und eingespannt.

Nun wird die Presse durch Hochfahren des Pressenstössels 5 mit dem Unterteil 4 (Fig. 1) geschlossen, so dass auch die Schneidplatte 6, wie in Fig. 3 dargestellt, nach oben fährt. Die Schneidplatte 6 drückt hierbei über den Kugelkäfig 10 und über seine Aufnahmeglieder, nämlich den Aufnahmering 11 und den Stirnmitnehmer 12, das Oberteil 1 und den mit ihm verbundenen Niederhaltertisch 2 (Fig. 1) gegen den eingestellten hydraulischen Niederhalterdruck nach oben, bis die Innenform des Kugelkäfigs 10 am Schneidstempel 15 ansteht. Dadurch wird der Werkstoff des Kugelkäfigs 10 im Bereich des zu schneidenden Fensters zwischen dem Schneidstempel 15 und dem Gegenstempel 18 mit dem Gegendruck des Gegenstempels 18 eingespannt. Dies ist der Zustand einer definierten Umformung des Feinschneidens.

Sobald die Schliesskraft der Presse, d. h. des Pressenstössels 5 (Fig. 1) die Summe der Niederhalterkraft des Niederhaltertisches 2 (Fig. 1), der Gegenkraft des Gegenstempels 18 und des Schnittwiderstandes an der Schneidfläche 16 des Schneidstempels 15 erreicht hat, beginnt der Schneidevorgang. Mit fortgesetzter Aufwärtsbewegung des Pressenstössels 5 (Fig. 1) drückt die Schneidplatte 6 den Kugelkäfig 10 über den Schneidstempel 15, indem der Niederhaltertisch 2 (Fig. 1) noch weiter nach oben ausweicht. Nachdem der Schneidstempel 15 die Wand des Kugelkäfigs 10 durchdrungen hat, drückt er den ausgeschnittenen Fensterformabfall 22 gegen die Gegenkraft des Gegenstempels 18 in die Schneidplatte 6, wie dies in Fig. 4 dargestellt ist. Ein innerer Arbeitsanschlag der Presse begrenzt hierbei nach erfolgtem Schnitt die Aufwärtsbewegung des Pressenstössels 5 (Fig. 1) und damit der Schneidplatte 6.

Anschliessend wird die Presse wieder geöffnet, indem der Pressenstössel 5 (Fig. 1) nach unten bewegt wird, so dass sich auch die Schneidplatte 6 nach unten bewegt, wie dies in Fig. 5 dargestellt ist. Der unter hydraulischem Druck stehende Niederhaltertisch 2 (Fig. 1) streift hierbei über das Oberteil 1 (Fig. 1) und damit über den Aufnahmering 11 und den Stirnmitnehmer 12 den Kugelkäfig 10 vom Schneidstempel 15 ab. Der Gegenstempel 18 stösst den Fensterformabfall 22 mit Hilfe seines hydraulischen Gegendrucks aus der Schneidplatte 6. worauf der Fensterformabfall 22 durch eine nicht dargestellte Presslufteinrichtung seitlich aus der Vorrichtung geblasen wird. Gleichzeitig kann nun der Indexierantrieb 13 (Fig. 1) den eingespannten Kugelkäfig 10 in die Schneidposition des nächsten Fensters drehen.

Die vorliegende Vorrichtung ermöglicht es, aus Kugelkäfigen, insbesondere solchen für Gleichlaufgelenke, Fenster ohne Bruchflächen zu stanzen, so dass sich ein aufwendiges und teures Räumen der Längsflächen der Fenster erübrigt. Die Vorrichtung kann in einfacher Weise in eine dreifach wirkende Feinschneidpresse eingebaut werden und ermöglicht zudem ein vollautomatisches, aufeinanderfolgendes Feinschneiden der Fenster in einer grossen Serie von Kugelkäfigen.

## Patentansprüche

1. Vorrichtung zum Feinschneiden von Fenstern in einem Kugelkäfig (10), gekennzeichnet durch ein zum Tragen des Kugelkäfigs (10) mit Aufnahmegliedern (11, 12) versehenes Oberteil (1), durch einen ortsfest angeordneten, einen Schneidstempel (15) tragenden Stempelhalter (7), der sich in den von den Aufnahmegliedern (11, 12) axial begrenzten, zur Aufnahme des Kugelkäfigs (10) vorgesehenen Zwischenraum erstreckt, und durch ein eine Schneidplatte (6) tragendes Unterteil (4), welches zudem mit einem in einer Schneidöffnung (17) der Schneidplatte (16) gleitend angeordneten Gegenstempel (18) versehen ist, wobei das Oberteil (1) und das Unterteil (4) gegeneinander, der Gegenstempel (18) bezüglich des Unterteils (4) und das Oberteil (1) bezüglich des Schneidstempels (15) richtungsgleich beweglich angeordnet sind.

2. Vorrichtung nach Anspruch 1, dadurch gekennzeichnet, dass die Aufnahmeglieder (11, 12) zum beidseitigen axialen Fassen und Zentrieren des Kugelkäfigs (10) ausgebildet sind.

3. Vorrichtung nach Anspruch 2, dadurch gekennzeichnet, dass ein Aufnahmeglied ein am Oberteil (1) drehbar gelagerter Aufnahmering (11) und ein diesem axial gegenüberliegendes Aufnahmeglied ein im Oberteil (1) drehbarer und axial verschiebbarer Stirnmitnehmer (12) ist.

4. Vorrichtung nach Anspruch 3, dadurch gekennzeichnet, dass der Stirnmitnehmer (12) mit einem Indexierantrieb versehen ist.

5. Vorrichtung nach Anspruch 1, dadurch gekennzeichnet, dass die auf dem Unterteil (4) befestigte Schneidplatte (6) eine solche Form aufweist, dass sie bei einer Bewegung des Unterteils (4) in Richtung zum Oberteil (1) über die Aufnahmeglieder (11, 12) für den Kugelkäfig (10) auf das Oberteil (1) drückt und dieses ebenfalls nach oben bewegt.

6. Vorrichtung nach Anspruch 5, dadurch gekennzeichnet, dass das Oberteil (1) einem einstellbaren hydraulischen Niederhaltedruck ausgesetzt ist.

7. Vorrichtung nach Anspruch 5, dadurch gekennzeichnet, dass der Gegenstempel (18) einem einstellbaren hydraulischen Gegendruck ausgesetzt ist.

8. Vorrichtung nach Anspruch 1, dadurch gekennzeichnet, dass das Oberteil (1) mit einem von einem einstellbaren hydraulischen Druck beaufschlagten Niederhaltetisch (2) einer dreifach wirksamen Feinschneidpresse verbunden ist, dass das Unterteil (4) mit einem beweglichen Pressenstössel (5) verbunden ist, und dass der Stempelhalter (7) an einem festen Pressengestell (3) befestigt ist, wobei der Gegenstempel (18) einem einstellbaren hydraulischen Gegendruck ausgesetzt ist.

9. Verwendung der Vorrichtung nach einem der Ansprüche 1 bis 8 zum Feinschneiden von Fenstern in Kugelkäfigen für Gleichlaufgelenke (10).

## Claims

1. Apparatus for the precision cutting of apertures in a ball cage (10), characterised by an upper part (1) provided with receiving members (11, 12) for supporting the ball cage (10), by a punch holder (7) arranged in a stationary manner and supporting a punch (15), which punch holder extends in the intermediate space provided for receiving the ball cage (10) and defined axially by the receiving members (11, 12) and by a lower part (4) supporting a cutting plate (6), which is also provided with a counter-punch (18) arranged to slide in a cutting opening (17) of the cutting plate (16), the upper part (1) and the lower part (4) being arranged to move with respect to each other, the counter-punch (18) being arranged to move with respect to the lower part (4) and the upper part (1) being arranged to move with respect to the punch (15) in the same direction.

2. Apparatus according to Claim 1, characterised in that the receiving members (11, 12) are constructed for axial gripping and centering of the ball cage (10) on both sides.

3. Apparatus according to Claim 2, characterised in that a receiving member is a receiving ring (11) mounted to rotate on the upper part (1) and a receiving member lying axially opposite thereto is an end entrainment member (12) able to rotate in the upper part (1) and able to slide axially.

4. Apparatus according to Claim 3, characterised in that the end entrainment member (12) is provided with an indexing drive.

5. Apparatus according to Claim 1, characterised in that the cutting plate (6) attached to the lower part (4) has such a shape that when the lower part (4) moves in the direction of the upper part (1) it presses by way of the receiving members (11, 12) for the ball cage (10) on the upper part (1) and likewise moves the latter upwards.

6. Apparatus according to Claim 5, characterised in that the upper part (1) is subject to an adjustable hydraulic holding-down pressure.

7. Apparatus according to Claim 5, characterised in that the counter-punch (18) is subject to an adjustable hydraulic counter-pressure.

8. Apparatus according to Claim 1, characterised in that the upper part (1) is connected to a holding-down table (2) of a triple-acting precision cutting press, which table is acted upon by an adjustable hydraulic pressure, that the lower part (4) is connected to a movable press ram (5) and that the punch holder (7) is attached to a fixed press frame (3), the counter-punch (18) being subject to an adjustable hydraulic counter-pressure.

9. Use of the apparatus according to one of Claims 1 to 8 for the precision cutting of apertures in ball cages for synchronising couplings (10).

## Revendications

1. Dispositif de découpage de précision de fenêtres dans une cage à billes (10), caractérisé par un élément supérieur (1) muni d'organes de réception (11, 12) pour porter la cage à billes (10), par un porte-poinçon (7) qui est disposé fixe et porte un poinçon de découpage (15) et qui s'étend dans l'intervalle délimité axialement par les organes de réception (11, 12) et prévu pour recevoir la cage à billes (10), et par un élément inférieur (4) qui porte une plaque de découpage (6) et qui est en outre muni d'un contre-poinçon (18) monté coulissant dans une ouverture de coupe (17) de la plaque de découpage (16), tandis que, suivant une même direction, l'élément supérieur (1) et l'élément inférieur (4) sont disposés mobiles l'un par rapport à l'autre, le contre-poinçon (18) monté mobile par rapport à l'élément inférieur (4) et l'élément supérieur (1) monté mobile par rapport au poinçon de découpage (15).

2. Dispositif selon la revendication 1, caractérisé en ce que les organes de réception (11, 12) sont agencés de façon à maintenir et centrer la cage à billes (10) dans le sens axial et sur les deux côtés.

3. Dispositif selon la revendication 2, caractérisé en ce qu'un organe de réception est constitué par un anneau de réception (11) monté rotatif sur l'élément supérieur (1), tandis qu'un organe de réception situé en regard de celui-ci dans le sens axial est constitué par un entraîneur frontal (12) monté rotatif et déplaçable axialement dans cet élément supérieur (1).

4. Dispositif selon la revendication 3, caractérisé en ce que l'entraîneur frontal (12) est équipé d'un mécanisme d'entraînement à indexage.

5. Dispositif selon la revendication 1, caractérisé en ce que la plaque de découpage (6) fixée sur l'élément inférieur (4) a une forme telle que, lors d'un déplacement de l'élément inférieur (4) vers l'élément supérieur (1), elle applique une pression sur cet élément supérieur (1) par l'intermédiaire des organes de réception (11, 12) prévus pour la cage à billes (10) et déplace également cet élément supérieur (1) vers le haut.

6. Dispositif selon la revendication 5, caractérisé en ce que l'élément supérieur (1) est soumis à une pression hydraulique de serrage réglable.

7. Dispositif selon la revendication 5, caractérisé en ce que le contre-poinçon (18) est soumis à une contre-pression hydraulique réglable.

8. Dispositif selon la revendication 1, caractérisé en ce que l'élément supérieur (1) est relié à une table serre-pièce (2) d'une presse de découpage de précision à triple action, cette table (2) étant actionnée par une pression hydraulique réglable, en ce que l'élément inférieur (4) est relié à un coulisseau (5) mobile et en ce que le porte-poinçon (7) est fixé sur un bâti de presse (3) fixe, le contre-poinçon (18) étant soumis à une contre-pression hydraulique réglable.

9. Application du dispositif selon l'une des revendications 1 à 8 au découpage de précision de fenêtres dans des cages à billes (10) pour articulations synchronisées (10).

Fig. 1

Fig. 2

Fig. 3

Fig. 4

Fig. 5